# FASCICULE DE BREVET EUROPEEN

(11) **EP 3 378 232 B1**
(45) Date de publication et mention de la délivrance du brevet: **08.01.2020**
(21) Numéro de dépôt: 16809503.2
(22) Date de dépôt: 18.11.2016
(51) Int. Cl.: H04N 21/235, H04N 21/438, H04N 21/643, H04N 21/845, H04L 29/08, H04L 29/06

(54) **PROCÉDÉ DE TRAITEMENT DE DONNÉES CODÉES, PROCÉDÉ DE RÉCEPTION DE DONNÉES CODÉES, DISPOSITIFS, ET PROGRAMMES D'ORDINATEURS ASSOCIÉS**
VERFAHREN ZUR VERARBEITUNG VON CODIERTEN DATEN, VERFAHREN ZUM EMPFANG VON CODIERTEN DATEN, ENTSPRECHENDE VORRICHTUNGEN UND COMPUTERPROGRAMME
METHOD FOR PROCESSING ENCODED DATA, METHOD FOR RECEIVING ENCODED DATA, CORRESPONDING DEVICES AND COMPUTER PROGRAMS

(30) Priorité: 20.11.2015 FR 1561204
(43) Date de publication de la demande: 26.09.2018
(73) Titulaire: B<>COM, 35510 Cesson-Sévigné (FR)
(72) Inventeur: HOUZE, Patrice, 35700 Rennes (FR)
(74) Mandataire: Ermeneux, Bertrand
(86) Numéro de dépôt international: PCT/FR2016/053009
(87) Numéro de publication internationale: WO 2017/085421

(56) Documents cités:
- US-A1- 2013 060 956
- THORSTEN LOHMAR ET AL: "Dynamic adaptive HTTP streaming of live content", WORLD OF WIRELESS, MOBILE AND MULTIMEDIA NETWORKS (WOWMOM), 2011 IEEE INTERNATIONAL SYMPOSIUM ON A, IEEE, 20 juin 2011 (2011-06-20), pages 1-8, XP032047733, DOI: 10.1109/WOWMOM.2011.5986186 ISBN: 978-1-4577-0352-2
- YASUAKI TOKUMO ET AL: "DASH: segment availability for low-latency live streaming", 100. MPEG MEETING; 30-4-2012 - 4-5-2012; GENEVA; (MOTION PICTURE EXPERT GROUP OR ISO/IEC JTC1/SC29/WG11),, no. m24795, 25 avril 2012 (2012-04-25), XP030053138,
- BOUZAKARIA NASSIMA ET AL: "Overhead and performance of low latency live streaming using MPEG-DASH", IISA 2014, THE 5TH INTERNATIONAL CONFERENCE ON INFORMATION, INTELLIGENCE, SYSTEMS AND APPLICATIONS, IEEE, 7 juillet 2014 (2014-07-07), pages 92-97, XP032629757, DOI: 10.1109/IISA.2014.6878732

## Description

### 1. Domaine de l'invention

Le domaine de l'invention est celui de la transmission et à la réception de données codées représentatives d'un contenu audiovisuel à un ou plusieurs clients par l'intermédiaire d'un réseau de communications

L'invention peut notamment, mais non exclusivement, s'appliquer à la livraison adaptative d'un contenu audiovisuel temps réel à un ou plusieurs clients.

### 2. Présentation de l'art antérieur

On connait une technique de transmission de contenus vidéo, dite «http adaptive streaming » qui consiste à stocker côté serveur, sous forme de segments temporels ; plusieurs versions encodées d'un même contenu vidéo, correspondant à des niveaux de qualité différents. Un client qui souhaite recevoir un contenu, requiert d'abord un fichier de description (« MPD » ou « Manifest ») des flux disponibles côté serveur et commande au serveur la livraison du segment du niveau de qualité adapté aux conditions de transmission réseau dont il dispose. Il peut changer de version au cours du temps en fonction de l'évolution de ces conditions. Cette technique est notamment décrite dans l'article intitulé « Dynamic Adaptive Streaming over http (DASH)- Standards and Design Principles », par Thomas Stockhammer, publié dans les Proceedings de la « ACM Conférence on Multimedia Systems, en février 2011, pages 133-144.

### 3. Inconvénients de l'art antérieur

Un premier inconvénient de cette technique réside dans la grande taille des segments disponibles au niveau du serveur, qui correspond dans le cas d'une séquence vidéo, à une durée comprise entre 3 et 10 secondes. Lorsque les conditions réseau ne sont pas optimales, sa transmission peut subir un retard ou latence qui n'est pas compatible avec des contraintes temps réel.

Un deuxième inconvénient de cette technique est liée au fait que les données d'un segment, que ce soit les informations de description ou les données codées, ne sont mises à disposition du client qu'une fois que le codage complet du segment est terminé, ce qui engendre une autre forme de latence qui n'est pas compatible non plus avec des contraintes temps réel.

Cette solution n'est donc pas adaptée à la livraison de contenus audiovisuels temps réels (pour « live », en anglais).

### 4. Objectifs de l'invention

L'invention vient améliorer la situation.

L'invention a notamment pour objectif de pallier ces inconvénients de l'art antérieur.

Plus précisément, un objectif de l'invention est de proposer une solution qui permette à un client d'accéder aux données codées au fur et à mesure de leur encodage, avec une granularité inférieure à celle d'un segment temporel.

On connait aussi du document de Lohmar et al. intitulé « Dynamic adaptive http streaming of live content » publié dans les proceedings de la conférence « IEEE International Symposium on a world of wireless mobile and multimedia Network », en juin 2011, une méthode basée sur DASH pour livrer un contenu multimédia en temps réel. Le fichier de description MPD décrit les segments déjà disponibles au niveau du serveur et ceux qui ne le sont pas encore. Le client doit déterminer par lui-même les instants de mise à disposition des segments non encore disponibles avant de les requérir auprès du serveur.

On connait en outre du document publié sous le numéro US2013/060956 le fait pour un serveur de diviser un segment temporel d'une séquence d'images, au sens de la norme DASH, en sous-segments et de transmettre les sous-segments d'un segment au fur et à mesure de leur encodage. Le conteneur transmis au client comprend non seulement les données codées de ce sous-segment, mais aussi des métadonnées du sous-segment suivant, de façon à lui permettre de préparer le décodage du sous-segment suivant.

### 5. Exposé de l'invention

Ces objectifs, ainsi que d'autres qui apparaîtront par la suite, sont atteints à l'aide d'un procédé de traitement de données codées représentatives d'une séquence d'images numériques, en vue de leur transmission à un équipement client par l'intermédiaire d'un réseau de communication dans un premier conteneur, dit conteneur de transport, destiné à stocker au moins les données codées des images de la séquence, caractérisé en ce qu'il comprend les étapes suivantes, mises en œuvre suite à l'encodage d'une image de ladite séquence, dite image courante :
- obtention des données codées représentatives de l'image courante
- extraction d'au moins une information représentative d'une structure de codage de l'image courante ;
- mise à jour du premier conteneur par insertion des données codées représentatives de l'image courante en une localisation prédéterminée ;
- mise à jour d'un deuxième conteneur, dit conteneur de métadonnées, par insertion de ladite au moins une information de structure de codage et d'une information représentative de la localisation des données codées dans le conteneur de transport; et
- transmission à l'équipement client du deuxième conteneur ;
- sur réception d'une requête de l'équipement client, dont la génération est décidée en fonction des informations de métadonnées du deuxième conteneur, comprenant au moins une information représentative de la localisation des données, transmission des données codées du conteneur de transport correspondant à ladite localisation.

Avec l'invention, des métadonnées représentatives d'une structure de l'image courante sont extraites des données codées au fur et à mesure de leur obtention par le serveur qui construit un conteneur de transport des métadonnées et des données codées à la volée. Ces métadonnées et les informations de localisation des données codées de l'image courante dans ce premier conteneur sont insérées dans un deuxième conteneur, dit conteneur de métadonnées. Ce deuxième conteneur est transmis au client dans son état intermédiaire, en mode push ou en mode pull. A partir des informations qu'il contient, l'équipement client décide des données codées à requérir pour l'image courante.

La transmission des métadonnées insérées dans le conteneur de métadonnées et des données codées insérées dans le conteneur de transport peut aussi bien se faire en mode « push » qu'en mode « pull ».

Avec l'invention, l'équipement client reçoit d'abord les métadonnées relatives au segment courant, puis, sur requête, les données codées de ce segment.

Ainsi, l'invention repose sur une approche tout à fait nouvelle et inventive de la livraison de contenus audiovisuels qui consiste à mettre des données codées et des métadonnées associées à ces données codées à la disposition d'un équipement client pendant la construction des conteneurs destinés à les transporter de l'équipement serveur vers cet équipement client, tout en laissant la possibilité à l'équipement client de décider s'il souhaite requérir les données codées du segment courant.

Selon une caractéristique avantageuse de l'invention, le procédé comprend une étape préalable de création du premier conteneur, comprenant une réservation d'un espace d'enregistrement des données codées et en ce que les données codées de l'image courante sont enregistrées dans l'emplacement qui lui est réservé à la suite des données codées précédemment traitées.

Un avantage est que les informations de localisation des images précédemment codées dans le conteneur ne changent pas au fur et à mesure de sa construction.

Selon un autre aspect de l'invention, le procédé comprend une étape préalable de création du premier conteneur, comprenant une réservation d'un espace global de stockage pour le groupe d'images et en ce que les données codées de l'image courante sont insérées avant les données codées des images précédemment traitées.

Un avantage est que le conteneur a in fine exactement la taille des données qu'il contient. L'espace mémoire est optimisé ainsi que les ressources de transmission.

Selon encore un autre aspect de l'invention, les données codées représentatives de l'image courante sont obtenues pour au moins deux niveaux de représentation, ladite au moins une information de structure de codage comprend une information relative aux niveaux de représentation, les données codées représentatives de l'image courante sont insérées dans un sous conteneur du premier conteneur en fonction du niveau de représentation et, la requête reçue de l'équipement client comprenant en outre une information de structure de codage relative au niveau de représentation choisi par l'équipement client, l'étape de transmission des données codées comprend la transmission des données codées du sous-conteneur correspondant audit niveau de représentation.

Selon encore un autre aspect de l'invention, le procédé comprend en outre une étape de segmentation des données codées obtenues en fonction d'une appartenance de l'image courante à un segment de la séquence d'images, un segment comprenant une pluralité d'images consécutives et en ce que les données codées sont insérés dans un sous-conteneur du premier conteneur associé audit segment.

Le procédé qui vient d'être décrit dans ses différents modes de réalisation est avantageusement mis en œuvre par un dispositif de traitement de données codées représentatives d'une séquence d'images numériques, en vue de leur transmission à un équipement client par l'intermédiaire d'un réseau de communication dans un premier conteneur, dit conteneur de transport, destiné à stocker au moins les données codées des images de la séquence.

Un tel dispositif est particulier en ce qu'il comprend les unités suivantes, aptes à être mises en œuvre suite à l'encodage d'une image de ladite séquence, dite image courante :
- obtention des données codées représentatives de l'image courante
- extraction d'au moins une information représentative d'une structure de codage de l'image courante ;
- mise à jour du premier conteneur par insertion des données codées représentatives de l'image courante en une localisation prédéterminée ;
- mise à jour d'un deuxième conteneur, dit conteneur de métadonnées, par insertion de ladite au moins une information de structure de codage et d'une information représentative de la localisation des données codées dans le conteneur de transport;
- transmission du deuxième conteneur à l'équipement client
- sur réception d'une requête de l'équipement client, dont la génération est décidée en fonction des informations de métadonnées du deuxième conteneur, comprenant au moins une information représentative de la localisation des données, transmission des données codées du conteneur de transport correspondant à ladite localisation.

Corrélativement, l'invention concerne aussi un procédé de réception de données codées représentatives d'une séquence d'images numériques par l'intermédiaire d'un réseau de communication.

Un tel procédé est particulier en ce qu'il comprend les étapes suivantes, mises en œuvre pour au moins une image de la séquence, dite image courante :
- obtention d'un deuxième conteneur, dit conteneur de métadonnées, comprenant au moins une information d'une structure de codage de l'image courante et une information représentative de la localisation des données codées représentatives de l'image courante dans un premier conteneur de transport ;
- Décision de requérir la transmission des données codées représentatives de l'image courante enregistrées dans le premier conteneur en fonction des informations obtenues;
- En cas de décision positive, émission d'un message de requête de transmission des données codées représentatives de ladite au moins une image, comprenant ladite information de localisation desdites données codées dans le premier conteneur.

Selon un aspect de l'invention, ladite au moins une information d'une structure de codage de l'image courante comprenant une information relative à un niveau de représentation de l'image codée parmi au moins deux niveaux distincts, le procédé comprend une phase d'initialisation au cours de laquelle il requiert les données codées représentatives de l'image courante au niveau de représentation le plus bas et il estime des paramètres représentatifs de conditions de transmission du réseau de communication et pour une image suivante, il décide de requérir les données codées à un niveau de représentation choisi en fonction des paramètres estimés.

Le procédé qui vient d'être décrit dans ses différents modes de réalisation est avantageusement mis en œuvre par un dispositif de de réception de données codées représentatives d'une séquence d'images numériques par l'intermédiaire d'un réseau de communication. Un tel dispositif est particulier en ce qu'il comprend les unités suivantes, aptes à être mises en œuvre pour au moins une image de la séquence, dite image courante :
- Obtention d'un deuxième conteneur, dit conteneur de métadonnées, comprenant au moins une information d'une structure de codage de l'image courante et une information représentative de la localisation des données codées représentatives de l'image courante dans un premier conteneur de transport ;
- Décision de requérir la transmission des données codées représentatives de l'image courante enregistrées dans le premier conteneur en fonction des informations obtenues;
- En cas de décision positive, émission d'un message de requête de transmission des données codées représentatives de ladite au moins une image, comprenant ladite information de localisation desdites données codées dans le premier conteneur.

L'invention concerne aussi un équipement serveur apte à communiquer avec un équipement client par l'intermédiaire d'un réseau de communication, caractérisé en ce qu'il comprend un dispositif de transmission de données codées selon l'invention.

L'invention concerne également un équipement client apte à communiquer avec un équipement serveur par l'intermédiaire d'un réseau de communication, caractérisé en ce qu'il comprend un dispositif de réception de données codées selon l'invention.

L'invention concerne encore un programme d'ordinateur comportant des instructions pour la mise en œuvre des étapes d'un procédé de traitement de données codées tel que décrit précédemment, lorsque ce programme est exécuté par un processeur.

L'invention concerne aussi un programme d'ordinateur comportant des instructions pour la mise en œuvre des étapes d'un procédé de réception de données codées tel que décrit précédemment, lorsque ce programme est exécuté par un processeur.

Ces programmes peuvent utiliser n'importe quel langage de programmation. Ils peuvent être téléchargés depuis un réseau de communication et/ou enregistrés sur un support lisible par ordinateur.

L'invention se rapporte enfin à des supports d'enregistrement, lisibles par un processeur, intégrés ou non au dispositif de codage d'une image numérique et au dispositif de décodage d'une image numérique selon l'invention, éventuellement amovible, mémorisant respectivement un programme d'ordinateur mettant en œuvre un procédé de traitement et un programme d'ordinateur mettant en œuvre un procédé de réception, tels que décrits précédemment.

### 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels :
- la figure **1** présente des exemples d'informations de structure de codage présentes dans une unité de type « NALU » ;
- la figure **2** présente de façon schématique un exemple de structure de conteneur de transport selon l'art antérieur ;
- la figure **3** illustre des exemples de dépendances hiérarchiques entre images dépendantes d'un groupe d'images codées selon la représentation ou niveau de qualité ;
- la figure **4** présente de façon schématique un exemple de structure d'un fichier d'indexation SSIX des données codées dans un conteneur de transport selon l'art antérieur ;
- la figure **5** présente de façon schématique les étapes d'un procédé de transmission de données codées selon l'invention ;
- la figure **6** présente de façon schématique un système de livraison de contenus audiovisuels en temps réel selon l'invention ;
- la figure **7** illustre les principes d'un encodage d'une séquence d'images en tuiles et de la livraison des données codées représentatives de tuiles à des niveaux de qualité différents d'une tuile à l'autre ;
- la figure **8** illustre de façon schématique la différence de poids entre les images intra ou I et les autres images dépendantes de type P ou B d'un groupe d'images ;
- la figure **9** présente les étapes d'un procédé de réception de données codées par un client selon l'invention ;
- la figure **10** illustre de façon schématique la fonctionnalité rendue possible pour un client par l'invention de requêter les données codées image par image, en fonction des ressources dont il dispose ;
- la figure **11** illustre de façon schématique un premier exemple de structure d'un conteneur de transport dans lequel les données codées sont enregistrées au fur et à mesure de leur obtention
- la figure **12** illustre de façon schématique un deuxième exemple de structure d'un conteneur de transport dans lequel les données codées sont enregistrées au fur et à mesure de leur obtention ;
- la figure **13** présente sous forme de diagramme de flux les échanges entre un client et un serveur lors de la mise en œuvre d'un mode de réalisation de l'invention ;
- la figure **14** présente de façon schématique un exemple de structure matérielle d'un dispositif de traitement de données codées selon l'invention ; et
- la figure **15** présente de façon schématique un exemple de structure matérielle d'un dispositif de réception de données codées selon l'invention.

### 7. Description d'un mode de réalisation particulier de l'invention

Le principe général de l'invention repose sur l'extraction et la mise à disposition par un serveur de métadonnées d'un flux vidéo (en direct ou à la demande) et sur l'exploitation de ces métadonnées par un client pour accéder à ce contenu audiovisuel image par image.

L'invention vise notamment des applications vidéo live interactives de bénéficier de délais de bout en bout fortement réduits qui utilisent les technologies HAS (« HTTP Adaptive Streaming », en anglais) comme le standard DASH (application de jeu ou de vote sur des flux TV par exemple) . Elle peut aussi bénéficier à des applications interactives privilégiant plutôt une qualité augmentée pour une zone spatiale de l'image par rapport au reste de l'image en utilisant la technologie DASH et un codec HEVC (application médicale par exemple).

Dans la suite de la description, on considère un flux vidéo ou train binaire comprenant des données codées représentatives d'une séquence d'images numérique. Ce flux vidéo est destiné à être transmis sur les réseaux. Il a une structure organisée et une syntaxe précise permet de décrire cette organisation. Les métadonnées insérées dans cette structure par le procédé selon l'invention permettront au décodeur destinataire de connaître quel est le type des données envoyées et la localisation de celles-ci dans le flux, par exemple où sont les images Intra et/ou quel outil initialiser pour décoder cette image.

Une couche d'abstraction réseau appelée NAL (pour « Network abstraction layer », en anglais) a été définie par la norme MPEG notamment, pour permettre l'usage de la même syntaxe vidéo dans de nombreux environnements réseau, ceci inclut des outils tels que les paramètres de séquence SPS (pour « Sequence Parameter Set », en anglais) et d'image PPS (pour « Picture Parameter Set », en anglais) qui offrent de la robustesse et de la flexibilité côté décodeur car les informations temporelles et spatiales des données codées sont clairement décrites et transmises avec le flux. Par exemple quand on transmet un conteneur de transport ou fichier mp4, les premiers octets du flux vidéo contiennent toutes ces données et permettent au décodeur de connaitre la structure du flux de données et les outils de décodage à mettre en œuvre, donc de s'initialiser.

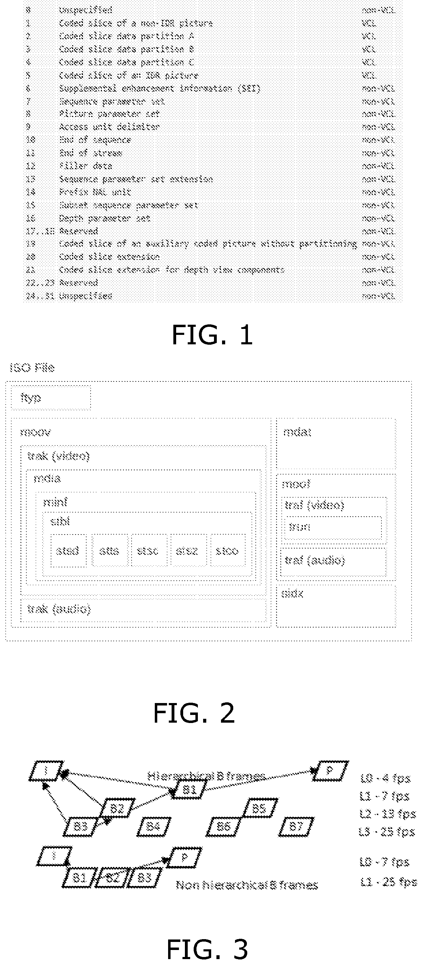

Il existe des « NAL Unit » (NALU) destinées à transporter ces métadonnées SPS, PPS, SEI (pour « Supplemental Enhancement Information », en anglais), ces NALUs sont dites « non VCL » (Video Coding Layer) car elles ne transportent pas de données vidéo. Les NALUs destinées au transport des données vidéo sont-elles appelées NALU VCL. Il existe évidemment beaucoup d'autres informations non VCL pour décrire complètement la structure d'un flux compressé. Des exemples d'informations sont présentés sur la Figure **1****.**

Pour les flux transportés au format ISOBMFF, c'est-à-dire sur la base de fichiers mp4, il existe une autre information importante sur la structure de codage externe aux NALUs (c'est-à-dire aux flux de données lui-même), c'est le SIDX (pour « Segment InDeX », en anglais) qui peut être renseigné pour indiquer la localisation dans le flux des images codées en Intra, en prédite ou en bidirectionnelles.

Un exemple de format de structure ou de conteneur (pour « container », en anglais) pour le transport de flux audiovisuels est illustré par la Figure **2****.** L'information SIDX est présente dans un sous-conteneur spécifique du fichier, il est au même niveau que le Moov (sous-conteneur de description du media) et du Mdat (sous conteneur des données vidéo).

A l'origine cette information SIDX a été mise à disposition pour permettre de réaliser de la navigation rapide (pour « seek », en anglais), telle qu'une avance rapide ou un retour rapide en se basant sur la structure du flux. Pour avoir un rendu visuel plus confortable on se base sur la fréquence d'image ou nombres d'images par seconde (pour « frame rate » , en anglais). Sur la Figure **3**, on a représenté les dépendances entre images ainsi que les fréquences d'images associées aux niveaux successifs (pour « level »n en anglais) L0 à L3 d'une structure de codage hiérarchique. Le fichier MP4 est téléchargé et la navigation dans ce fichier est rendue possible grâce à ces informations. On comprend que le fichier doit avoir été préalablement téléchargé (vidéo à la demande). Un tel mécanisme n'est pas adapté à une transmission temps réel (pour «live » en anglais).

A titre d'exemple, la technologie de transport DASH qui consiste à transférer les données sous forme de petits segments (petits fichiers) successifs utilise cette fonctionnalité, elle inclut les informations dans une sous-boite appelée SSIX (pour « Sub Segment IndeX », en anglais).

DASH est une technologie dite adaptative qui permet de télécharger des segments de qualité (résolution, débit) différent, chaque représentation DASH aura donc son SIDX et son SSIX correspondant, le SSIX affiche clairement les niveaux que le client DASH pourra utiliser pour adapter sa fréquence d'images. En relation avec la Figure , on illustre un exemple de format de fichier d'index, tel que spécifié par exemple par la norme ISOBMFF (pour « ISO Base Media File Format », en anglais) dans le document publié en juillet 2014 et disponible à l'adresse suivante http://www.w3.org/2013/12/byte-stream-format-reistry/isobmff-byte-stream-format.html.

Ce mécanisme permet à un client DASH qui a téléchargé une succession de fichiers (segments) comportant chacun la fréquence d'images associée au fichier, quelle que soit la représentation (débit) téléchargée, de se déplacer dans la succession de segments constituant le fichier complet à la bonne fréquence d'images (par exemple 7 images par s).

L'invention vise à mettre à la disposition du client toutes ces définitions de syntaxe et de métadonnées à la volée. Autrement dit, le client reçoit les informations de structure en même temps que le fichier de données, « il reçoit le colis d'une étagère à monter avec sa notice de montage ».

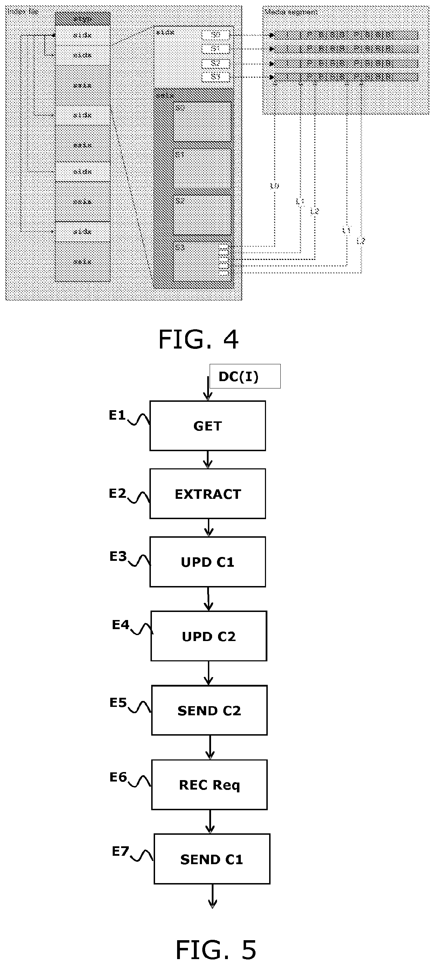

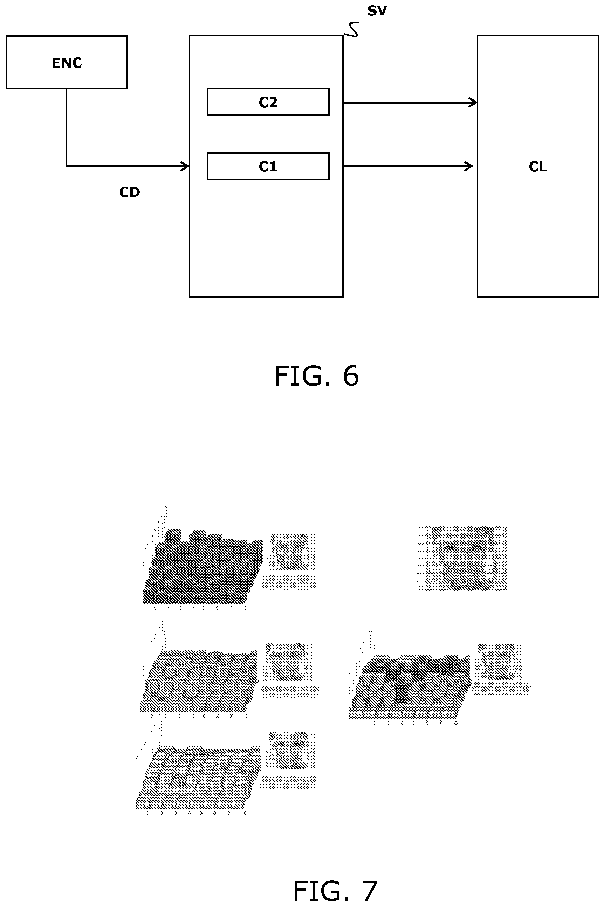

En relation avec la Figure **5**, on décrit les étapes d'un procédé de transmission de données codées représentatives d'une séquence d'images selon un mode de réalisation de l'invention. Ce procédé est par exemple mis en œuvre par un équipement serveur SV, illustré par la Figure **6****.**

La séquence d'images est encodée par un encodeur intégré ou non à l'équipement serveur. Par exemple cet encodeur produit des données codées conformément aux spécifications d'une norme de compression telle que AVC, HEVC ou une version future dite « post HEVC ».

En E1, on obtient des données codées représentatives d'une image courante de la séquence. Si l'encodeur est intégré au serveur, les données codées peuvent être brutes. Si l'encodeur n'est pas intégré au serveur, elles sont encapsulées dans un conteneur de transport C0, par exemple conforme à la norme MPEG-2 TS ou ISO BMFF.

En E2, on extrait des données codées au moins une information représentative d'une structure de codage de l'image courante ;
En E3, on met à jour un premier conteneur, dit conteneur de transport par insertion des données codées représentatives de l'image courante en une localisation prédéterminée ; On suppose que ce conteneur a été créé préalablement et qu'il est rempli au fur et à mesure que les données codées et leurs métadonnées associées sont reçues de l'encodeur.

Avantageusement, le procédé selon l'invention comprend en outre une étape de segmentation des données codées, c'est-à-dire que le conteneur comprend des sous-conteneurs destinées à enregistrer une quantité de données prédéterminées, correspondant par exemple à un certain nombre d'images consécutives de la séquence d'images.

En E4, on met à jour un deuxième conteneur, dit conteneur de métadonnées, par insertion de ladite au moins une information de structure de codage extraite et d'une information représentative de la localisation des données codées dans le conteneur de transport;

En E5, on transmet le premier conteneur à l'équipement client. On comprend que ce conteneur peut être transmis alors que sa construction n'est pas terminée. Avantageusement, il est transmis au client régulièrement après une mise à jour, dans son intégralité, ou seulement les informations ajoutées lors de la dernière mise à jour.

A partir de ce conteneur de métadonnées, le client va extraire les informations de structure spatiale et temporelle de la ou des images déjà disponibles et décider celles qu'il souhaite télécharger. Il va alors requêter une partie du conteneur C1 en fonction de sa décision. Dans le cas où le flux de données codées est segmenté, le sous-conteneur C1 correspondant au segment en cours de remplissage peut ne pas être terminé et dans ce cas, seules les données codées représentatives de l'image courante sont transmises au client. De la même manière, le conteneur de métadonnées C2 est transmis au client avant d'être définitivement construit.

Un but recherché est de permettre à un client DASH de connaître les informations de syntaxe et de structure des données codées avant de télécharger le fichier lui-même afin de lui permettre de faire des choix a priori et non a postériori.
Selon un mode de réalisation de l'invention, on met en œuvre un canal serveur/client permettant le transfert de ces données. Ce canal est séparé de la transmission de données classiques du flux adaptif DASH, à savoir les données codées. Le client exploite les métadonnées extraites du flux amont côté serveur/codeur et transmises (par avance) au client pour choisir de façon optimale les données vidéo qu'il souhaite télécharger.

En relation avec la Figure **6****,** la réalisation de l'étape E2 d'extraction des métadonnées (PS, SPS, SEI) est faite côté serveur ou encodeur. Un flux vidéo encodé disponible en sortie de l'encodeur ENC ou en amont du serveur SV est un flux qui est formaté pour contenir toutes les informations nécessaires au décodage. Ces informations sont généralement enrichies au fil de l'eau côté encodeur qui fabrique un conteneur de transport C0 comprenant les métadonnées et les flux audio et vidéos encodés, à un ou plusieurs niveaux de qualité/débit (souvent un flux TS nommé Mezzanine dans le cas du multi-débits) « transportable sur le réseau ». Ces informations à extraire sont donc présentes sitôt que le flux est encodé et mis à disposition d'un serveur (cas du live). L'opération d'extraction consiste donc à extraire l'information pertinente à l'endroit où elle est présente dans le flux Mezzanine.

Selon un mode de réalisation de l'invention, la mise à disposition de l'information extraite et sa distribution à un client est réalisée de la façon suivante :
- les informations extraites sont ainsi externalisées du flux principal qui contient toutes les données utiles (métadonnées et données codées).
- Les informations sont formatées, c'est-à-dire qu'elles sont organisées dans un conteneur C2, sous forme d'une structure lisible par le client, par exemple une simple structure XML qui contient les informations demandées par le client (PPS, SPS, SEI, SIDX,...) ou bien une structure plus complexe, par exemple pour un fichier de description (« Manifest ») de Métadonnées (MMPD pour « Media Metadata Présentation Description », en anglais) qui est synchronisé avec le fichier de description MPD DASH. Ce fichier MMPD fournit au fil de l'eau les informations MMPD correspondant au MPD à venir, mais donc un peu en avance de phase et en tout état de cause, avant que le segment soit complètement construit côté serveur ou serveur/segmenteur. De cette manière, le client obtient les informations lui permettant de choisir le niveau de qualité/débit à requérir pour le segment courant ;
- Les informations peuvent être transmises au client de différentes manières, soit simplement en mode pull client/serveur sur http. Dans ce cas, le client requête le fichier XML ou Manifest à chaque fois qu'il souhaite prendre une décision en avance de phase. En variante, on a recours soit à un mode push/pull par ouverture d'un canal parallèle sur une socket TCP à l'aide d'un protocole de type « Websocket », soit en mode push en utilisant le système d'écoute SAP Announcement Multicast selon lequel le serveur alimente un multicast « réservé » (@multicast réservé) permettant de rafraîchir en temps réel les informations liées à un ou plusieurs flux.

La mise à disposition au fil de l'eau d'informations de syntaxe et de métadonnées peut trouver de nombreuses applications. On décrit maintenant deux exemples d'application particuliers, mettant en œuvre la technologie DASH:
- Besoin de connaître à priori l'organisation spatiale d'un flux de données encodé selon un schéma de type HEVC ou AVC, dans un mode selon lequels les images de la séquence sont partitionnées en tuiles (pour « tiles », en anglais) ou tranches (pour « slices», en anglais).

Ce premier cas d'usage concerne un procédé d'adaptation au débit tuile par tuile à la bande passante globale d'un client. Un flux de données HEVC ou AVC est construit pour une distribution en mode adaptive streaming et donc décliné en plusieurs représentations (débits). Le principe vu du client est d'optimiser la bande passante disponible et donc de demander des débits différents pour chaque tuile selon un algorithme plus ou moins compliqué, qui peut à minima privilégier les tuiles centrales mais qui peut aussi être piloté par des moteurs de reconnaissance de zone d'intérêt (texture, couleur, reconnaissance de visage, ...)

L'information sur le nombre de tuiles, le fait qu'elles soient identiques dans une séquence est annoncée dans les métadonnées de type SPS et PPS, les dépendances entres tuiles sont indiquées dans des NALU spécifiques message SEI.

Un but pour le client est de recevoir les NALU non VCL sans les NALU VCL qui contiennent les données vidéo encodées (Element Stream ES), sans connaitre a priori les tailles de ces NALUs. Selon l'invention, on requête quelques dizaines d'octets pour obtenir les SPS, PPS et SEI en entier.

Une alternative proposée est d'extraire, formater et distribuer ces métadonnées côté serveur. Le client requête l'information disponible côté serveur dès qu'il en a besoin (par exemple à chaque segment, à chaque GoP voir à chaque image), il peut même s'abonner à un ou plusieurs flux de streaming pour obtenir les métadonnées correspondant à chaque représentation rafraichies en permanence, par exemple sous la forme d'un message d'annonce de type « SAP announcement ».

On présente, en relation avec la Figure **7****,** le principe de composition d'une image « tuilée » adaptée au débit client. L'algorithme d'adaptation est réalisée côté client, ce qui nécessite de connaître le nombre de tuiles, leur taille, leur dépendances avant de décider les téléchargements pour un GoP complet.

L'extraction de métadonnées est relativement simple dans ce cas car les informations NALU non VCL et NALU VCL sont construites au fil de l'eau pour constituer un flux continu GoP par GoP. Il faut donc repérer en passant en revue (pour « parser », en anglais) les données dans l'affluent, les organiser et les mettre à disposition du client.
- Besoin de connaître la structure temporelle mise en œuvre pour l'encodage d'un flux AVC ou HEVC
Il s'agit dans ce cas d'usage de pouvoir connaître à priori le type d'image (par exemple Inter, Intra ou bidirectionnelle), les métadonnées de décodage, la taille de celle-ci et l'emplacement des données à requêter (pour « byte range », en anglais) de chaque niveau de représentation d'un flux donné. Le but est d'obtenir ces informations en avance de phase pour pouvoir décider quelle représentation on souhaite télécharger en fonction des conditions du réseau ou des contraintes de délai et ce image par image (sachant qu'une décision pour une image intra s'applique au GoP complet compte-tenu des dépendances temporelles).
Les cas d'applications peuvent être multiples pour des applications qui demandent à connaître la sémantique du contenu : application temps réel sous contrainte de délai, les applications fonctionnant sur plusieurs chemins réseau (multipath) pour lesquels ils vont appliquer des règles de priorité différentes en fonction de l'importance (type d'image) de l'information vidéo transportée.

Cette information est évidemment présente dans tous les formats de fichiers (mp4, TS,...) sous forme de métadonnées, une particularité pour les formats ISOBMFF et TS est toutefois très intéressante pour les flux adaptive streaming DASH (désormais le standard).
Il s'agit de l'information SIDX définie et standardisée pour le format ISOBMFF qui combinée aux apports de DASH qui propose un enrichissement avec des informations appelées SSIX.

Cette disposition SIDX a été pensée pour être utilisée pour les fichiers téléchargés (vidéo à la demande) mais cette spécification peut avantageusement être utilisée pour les flux live, la seule contrainte est de rester conforme à la norme. La norme prévoit cette information dans le segment (In band) pour les fichiers ISOBMFF et plutôt dans un container extérieur pour les fichiers TS.

L'idée est donc d'extraire à la volée cette information SIDX/SSIX de chaque représentation disponible côté serveur, et de la mettre à disposition du client à chaque image disponible (c'est-à-dire toutes les 40ms), le rafraîchissement est permanent et l'information est mise à disposition du client (comme un serveur de métadonnées synchronisé avec le MPD des segments disponible et du segment en cours).

Principalement dans le cas d'un contenu DASH (ISOBMFF ou TS) il s'agit de permettre au client (ou un proxy) de requêter les infos des bytes-range des Intras, Prédites et Bidirectionnelles dans chaque représentation pour pouvoir décider la représentation qu'il veut/peut télécharger et sur quel chemin s'il est Multipath.

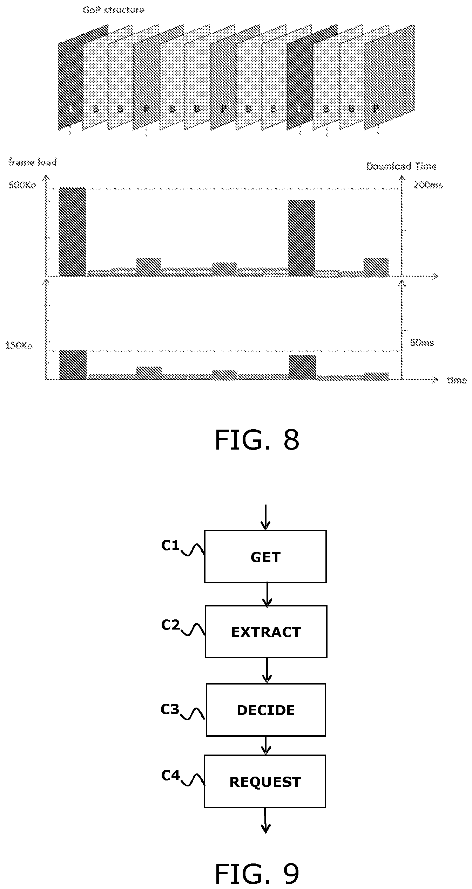

En relation avec la Figure **8**, on décrit maintenant les étapes d'un procédé de réception de données codées selon l'invention. Ce procédé est par exemple mis en œuvre par un équipement client ou par un équipement proxy situé en coupure du trajet suivi par les flux de données en provenance de l'équipement serveur et en amont de l'équipement client dans le réseau de communication.
On suppose qu'un équipement client a préalablement requis un fichier de description MPD du contenu audiovisuel qu'il souhaite recevoir. Dans le cas d'une application temps réel ce fichier n'est pas forcément complet, car l'encodage de la séquence d'images du contenu audiovisuel est en cours.

Selon l'invention, il obtient au cours d'une étape C1 un deuxième conteneur, dit conteneur de métadonnées, comprenant au moins une information d'une structure de codage d'une image courante et une information représentative de la localisation des données codées représentatives de l'image courante dans un premier conteneur de transport.

En C2, il décide, en fonction des informations de métadonnées obtenues, de requérir la transmission des données codées représentatives de l'image courante enregistrées dans le premier conteneur en fonction des informations obtenues.

En cas de décision positive, il émet en C3 un message de requête de transmission des données codées représentatives de ladite au moins une image à destination du serveur, comprenant ladite information de localisation desdites données codées dans le premier conteneur.

En relation avec la Figure **9****,** on constate que les images I ou Intra ont un poids bien plus élevé que les images prédites de types Inter P ou bidirectionnelles B. Pour ces images I, il est particulièrement important pour le client d'avoir accès à des métadonnées de structure, afin d'adapter sa requête aux ressources dont il dispose.

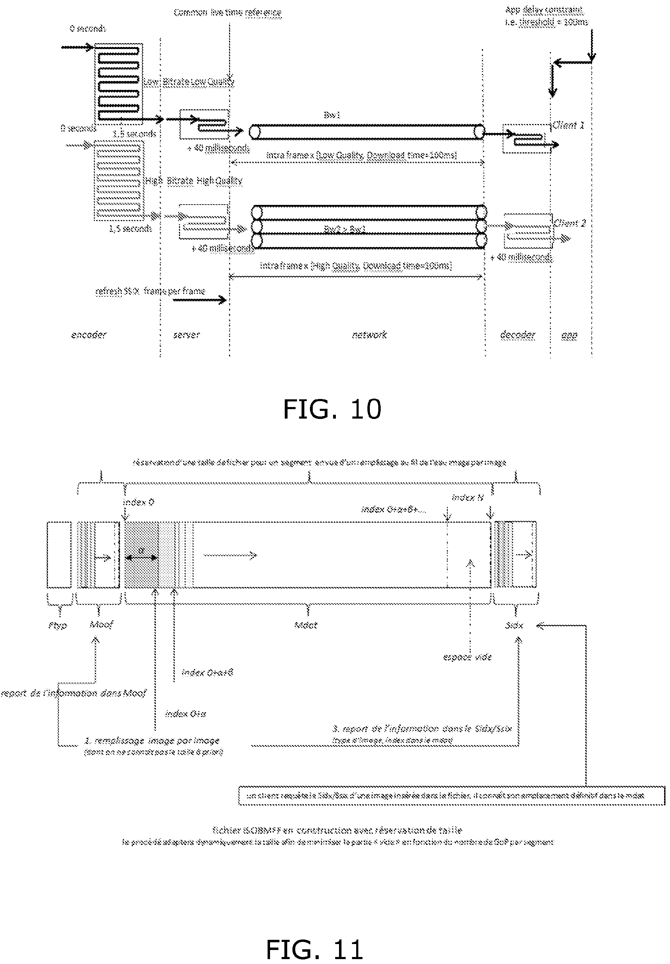

Sur la Figure **10****,** on a représenté un premier client Cl1 qui requiert une image Intra à un niveau de qualité faible parce qu'il dispose d'une bande passante BW1 limitée et un deuxième client CI2 qui requiert la même image Intra à un niveau de qualité plus élevé du fait que sa bande passant BW2 est plus élevée.

L'invention met en place côté serveur un mécanisme d'extraction de ces métadonnées de structure du flux vidéo pendant la construction du segment. Le serveur DASH soit être capable extraire ces métadonnées, image par image, pendant qu'il construit le segment.

En outre, on souhaite que le segment reste conforme aux spécifications DASH. Une fois le segment terminé, il faut donc calculer une réservation pour bien indexer le segment final. L'offset étant calculé, on enrichit à la volée les infos frame par frame qui constitueront le segment final. Le client peut ainsi requêter régulièrement, par exemple toutes les 40ms, les infos SSIX des frames qui sont présentées à la volée dans la box, et ce pour chaque représentation ou niveau de débit/qualité encodé côté serveur.

Selon l'invention, on définit aussi un format pour ces métadonnées (SSIX de chaque représentation avec les différents levels) dont le client a besoin et un mode de transmission (http, websocket).

Le client lit les métadonnées de type SSIX après le téléchargement (pour « download », en anglais) d'un GoP et décide quelle représentation et quel byte-range il va requérir pour le GOP suivant.

Selon un premier mode de réalisation de l'invention, illustré par la figure **10****,** on construit la structure complète du segment (MP4) sans la « fermer » pour pouvoir l'étendre en fonction de la taille réelle des images encodées et pour la remplir à mesure de la progression de l'encodage. Le fichier de métadonnées SSIX décrit la structure de codage et permet donc d'accéder unitairement à chaque image d'un segment. Ainsi, chaque fois que l'encodeur produit les données codées représentatives d'une image de la séquence, elle est placée au « bon endroit » dans un Moof + Mdat et les en-têtes du fichier segment (Moov) et les index SIDX et SSIX sont enrichis. Dans ce cas, seule la taille des en-têtes jusqu'au premier Moof doit être connue au démarrage d'un segment.

Selon un deuxième mode de réalisation de l'invention, illustré par la figure **11**, on peut aussi construire le fichier de façon continue en insérant les données codées d'une image courante avant les données codées d'une image précédemment traitée et en décalant les box déjà présentes. Dans ce cas, l'index associé aux données codées de l'image précédente est modifié en conséquence.

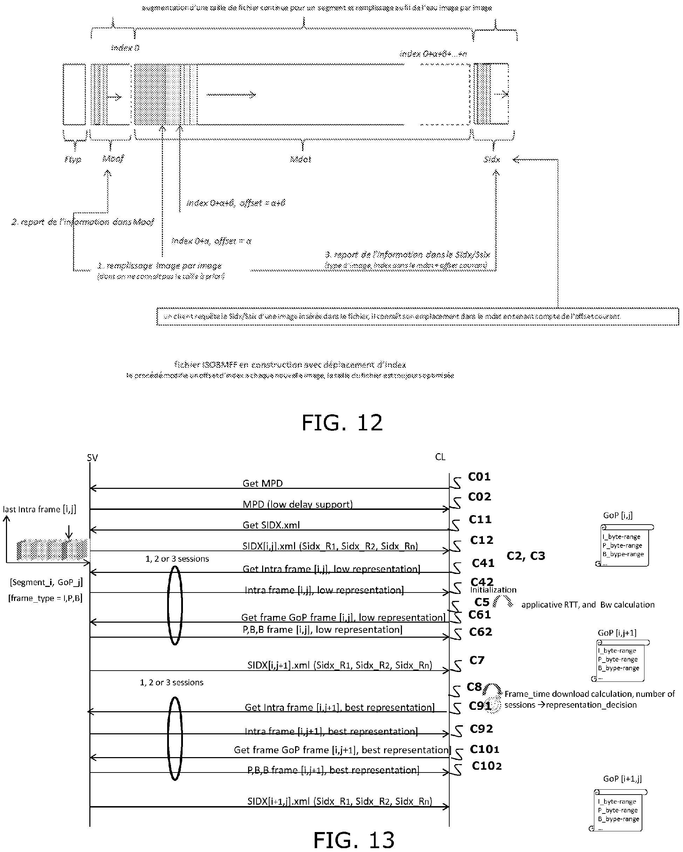

En relation avec la Figure **12****,** on décrit maintenant un mode de réalisation particulier de l'invention, selon lequel un client Cl souhaite recevoir un contenu audiovisuel temps réel de la part d'un serveur SV. On suppose que le serveur SV met en œuvre un mode de transmission adaptative, par exemple selon le protocole DASH. Il reçoit des données codées d'un encodeur dans N représentations différentes, avec N entier non nul, qu'il découpe en segments. Les données codées correspondant à un segment sont encapsulées dans un sous-conteneur d'un conteneur de transport, par exemple conforme à la norme ISO BMFF, comme illustré par la figure **4** déjà décrite.

Au cours d'une étape C01, le client requiert un fichier de description ou MPD du contenu audiovisuel.

Il l'obtient en C02. De façon connue, ce fichier décrit les différentes représentations R1 à RN, avec N entiers non nul, ou niveaux de qualité du contenu encodé qui vont être mises à disposition des clients par le serveur.

On suppose en outre que ce fichier indique que le serveur supporte une fonctionnalité de type « court délai » (pour « low delay », en anglais). Cette fonctionnalité correspond à celle fournie par le procédé de transmission d'un contenu audiovisuel selon l'invention, qui vient d'être décrit. Cette fonctionnalité permet à un serveur de mettre des images du contenu à disposition de ses clients au fur et à mesure qu'il les reçoit de l'encodeur sans attendre un fragment complet

En C1, il obtient du serveur un conteneur de métadonnées contenant les informations de structure de codage, par exemple le type d'une image, des informations de décodage, telles que le CTS et le PTS et des informations de localisation, par exemple des index de début et de fin SIDX des données codées représentatives des images de la séquence déjà disponibles dans le conteneur de transport.

Par exemple, le client requiert explicitement ce conteneur de métadonnées en C11 et le reçoit en C12. Par exemple ce conteneur est au format .xml conforme à la norme XML (pour « Extensible Markup Language », en anglais).

En variante, ce conteneur de métadonnées peut prendre le format d'un fichier de description de données de type MPD ou « Manifest ». Dans ce cas, il faudrait prévoir une extension de la norme DASH spécifiant le fait de fournir les informations de localisation des données codées et les informations de structure de codage d'une image de la séquence dans un fichier MPD.

En C2, le client extrait des informations de ce conteneur de métadonnées et décide en C3 s'il les requête en fonction des métadonnées reçues (taille, niveau de représentation).

En C41, il requête au serveur les données codées représentatives de l'image intra I la plus récente dans sa représentation R1 de plus faible qualité. On suppose que c'est l'image i du groupe d'image GOP j, avec i et j entiers non nuls. Il s'agit d'une phase d'initialisation au cours de laquelle le client teste les ressources de communication dont il dispose avec le serveur SV.

On notera que la mise en œuvre de cette étape peut se faire de différentes manières. Le client peut utiliser un ou plusieurs liens de communication vers le serveur et, sur chacun de ces liens mettre en œuvre une ou plusieurs sessions de communication, par exemple selon un protocole de communication de type TCP (pour « Transmission Communication Protocol », en anglais). Avantageusement, il peut choisir de requêter les données codées fragment par fragment sur un ou plusieurs des liens de communication disponibles.

En C42, le client reçoit les données codées représentatives de l'image i,j de la représentation R1.

En C5, il calcule le délai de transmission aller/retour ou RTT (pour « Round Trip Time », en anglais) et évalue la bande passante réelle dont il dispose sur le ou les liens de transmission avec le serveur.

En C61 il requiert la transmission des autres images du groupe d'images GOPj dans la même représentation R1 que l'image I. On suppose qu'il s'agit d'images dépendantes de I, de type P pour prédites ou B pour bidirectionnelles. Comme ces images ont un poids très inférieur à celui de l'image I, il est envisageable de les requêter en une seule fois. Il les reçoit en C62.

En C7, le client obtient du serveur une version mise à jour du conteneur de métadonnées, par exemple de type SIDX.xml. Avantageusement, le serveur envoie régulièrement une nouvelle version au client en mode Push. Bien sûr, le mode Pull tel que précédemment décrit est aussi possible.

De cette nouvelle version du conteneur de métadonnées, le client extrait en C8 les poids de la prochaine image I dans les différentes représentations disponibles, estime le temps de réception de cette nouvelle image I à l'aide des paramètres réseau qu'il a évalués en C5 et décide de la meilleure représentation à requêter.

En C91 il requiert donc l'image I suivante (du GOP j+1) dans la représentation choisie, la reçoit en C92. En C101 il requiert les images dépendantes du GOP j+1 dans la même représentation et il les reçoit en C102.

On notera que s'il dispose de plusieurs liens (« paths » en anglais) vers le serveur, le client peut requérir les images dépendantes sur un lien avant d'avoir reçu complètement l'image I sur un autre lien.

Les étapes du procédé sont ensuite répétées pour les groupes d'images suivants de la séquence.

L'invention qui vient d'être présentée permet donc côté serveur (d'extraire les métadonnées d'un flux en construction (« live » ou « on demand »).
Elle nourrit au fil de l'eau image par image les informations de métadonnées nécessaires au téléchargement de l'image en cours et des informations inhérentes à sa structure spatiale et temporelle (ses dépendances)
Avantageusement, elle assure une étape de formatage « out of band » d'un conteneur de métadonnées, qui est rafraichi au fur et à mesure de l'obtention par le serveur des données codées représentatives d'une nouvelle image de la séquence.
Elle propose un mécanisme permettant d'enrichir les informations métadonnées de manière à rendre cohérentes et conformes les informations natives d'un conteneur de transport ou fichier segmenté DASH (SIDX/SSIX) destiné à être téléchargé.
Avantageusement, l'invention prévoit un canal de requête client/serveur pour récupérer les informations de métadonnées supplémentaires avant le téléchargement des données codées (de type websocket, http).
Côté client l'invention prévoit en outre un module spécifique (qui peut être extérieur au client vidéo DASH ou intégré) capable de requêter les métadonnées, en particulier le conteneur de métadonnées et donne la possibilité au client de décider quelles données codées il souhaite requêter (images I, P, B, représentation, tuile etc.

On notera que l'invention qui vient d'être décrite, peut être mise en œuvre au moyen de composants logiciels et/ou matériels. Dans cette optique, les termes « module » et « entité », utilisés dans ce document, peuvent correspondre soit à un composant logiciel, soit à un composant matériel, soit encore à un ensemble de composants matériels et/ou logiciels, aptes à mettre en œuvre la ou les fonctions décrites pour le module ou l'entité concerné(e).

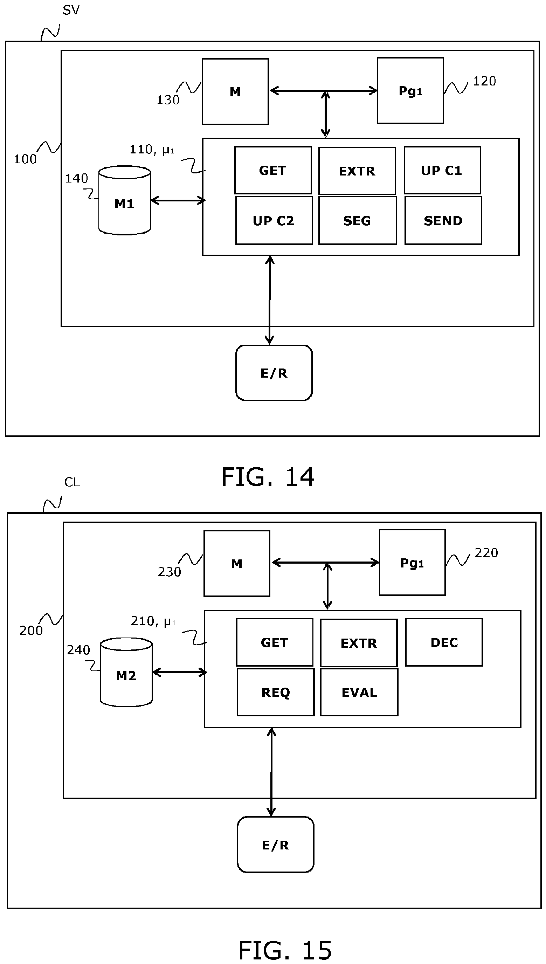

En relation avec la figure **14**, on présente maintenant un exemple de structure simplifiée d'un dispositif 100 de traitement de données codées selon l'invention. Le dispositif 200 met en œuvre le procédé de traitement selon l'invention qui vient d'être décrit en relation avec la Figure **5****.**

Par exemple, le dispositif **100** comprend une unité de traitement **110**, équipée d'un processeur µ1, et pilotée par un programme d'ordinateur Pg1 **120**, stocké dans une mémoire **130** et mettant en œuvre le procédé de selon l'invention.

A l'initialisation, les instructions de code du programme d'ordinateur Pg₁ 120 sont par exemple chargées dans une mémoire RAM avant d'être exécutées par le processeur de l'unité de traitement 110. Le processeur de l'unité de traitement 110 met en œuvre les étapes du procédé décrit précédemment, selon les instructions du programme d'ordinateur 120.
Dans cet exemple de réalisation de l'invention, le dispositif 100 comprend au moins une unité GET d'obtention des données codées représentatives de l'image courante, une unité EXT d'extraction d'au moins une information représentative d'une structure de codage de l'image courante, une unité UP C1 de mise à jour du premier conteneur par insertion des données codées représentatives de l'image courante en une localisation prédéterminée, une unité UP C2 de mise à jour d'un deuxième conteneur, dit conteneur de métadonnées, par insertion de ladite au moins une information de structure de codage et d'une information représentative de la localisation des données codées dans le conteneur de transport; et une unité SEND de transmission à l'équipement client d'au moins le deuxième conteneur C2.

Avantageusement le dispositif 100 comprend en outre une unité SEG de segmentation des données codées en segments temporels. Dans ce cas, les données codées sont insérées dans un sous-conteneur du premier conteneur C1 associé audit segment.

Le dispositif 100 comprend en outre une première unité M1 de stockage, par exemple de type buffer, de données codées représentatives d'au moins une image de la séquence.

Ces unités sont pilotées par le processeur µ1 de l'unité de traitement 110.

De façon avantageuse, un tel dispositif 100 peut être intégré à un équipement serveur SV, par exemple conforme à la norme DASH. Le dispositif 100 est alors agencé pour coopérer au moins avec un module d'émission réception dans un réseau de communication de l'équipement serveur.

En relation avec la figure **15**, on présente maintenant un exemple de structure simplifiée d'un dispositif 200 de réception de données codées selon l'invention. Le dispositif 200 met en œuvre le procédé de réception de données codées selon l'invention qui vient d'être décrit en relation avec la Figure **8****.**

Par exemple, le dispositif **200** comprend une unité de traitement **210**, équipée d'un processeur µ2, et pilotée par un programme d'ordinateur Pg2 2**2**0, stocké dans une mémoire **230** et mettant en œuvre le procédé de selon l'invention.

A l'initialisation, les instructions de code du programme d'ordinateur Pg₁ 120 sont par exemple chargées dans une mémoire RAM avant d'être exécutées par le processeur de l'unité de traitement 210. Le processeur de l'unité de traitement 210 met en œuvre les étapes du procédé décrit précédemment, selon les instructions du programme d'ordinateur 220.
Dans cet exemple de réalisation de l'invention, le dispositif 100 comprend au moins une unité GET d'obtention d'un deuxième conteneur, dit conteneur de métadonnées, comprenant au moins une information d'une structure de codage de l'image courante et une information représentative de la localisation des données codées représentatives de l'image courante dans un premier conteneur de transport, une unité EXT d'extraction de ladite au moins une information d'une structure de codage de l'image courante et de l'information représentative de la localisation des données codées représentatives de l'image courante dans le premier conteneur de transport, une unité DECIDE de décision de requérir la transmission des données codées représentatives de l'image courante enregistrées dans le premier conteneur en fonction des informations obtenues et une unité SEND a^te à émettre, en cas de décision positive, un message de requête de transmission des données codées représentatives de ladite au moins une image, comprenant ladite information de localisation desdites données codées dans le premier conteneur.

Avantageusement le dispositif 200 comprend en outre une unité EST d'estimation des paramètres représentatifs de conditions de transmission du réseau de communication
Le dispositif 200 comprend en outre une première unité M2 de stockage, par exemple de type buffer, de données codées représentatives d'au moins une image de la séquence et des informations de métadonnée reçues de l'équipement serveur.

Ces unités sont pilotées par le processeur µ2 de l'unité de traitement 210.

De façon avantageuse, un tel dispositif 200 peut être intégré à un équipement client CL, par exemple conforme à la norme DASH. Le dispositif 200 est alors agencé pour coopérer au moins avec un module d'émission réception dans un réseau de communication de l'équipement client.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Procédé de traitement de données codées représentatives d'une séquence d'images numériques, en vue de leur transmission à un équipement client par l'intermédiaire d'un réseau de communication dans un premier conteneur, dit conteneur de transport, destiné à stocker au moins les données codées des images de la séquence, **caractérisé en ce qu'**il comprend les étapes suivantes, mises en œuvre suite à l'encodage d'une image de ladite séquence, dite image courante :
- obtention (E1) des données codées représentatives de l'image courante
- extraction (E2) d'au moins une information représentative d'une structure de codage de l'image courante ;
- mise à jour (E3) du premier conteneur par insertion des données codées représentatives de l'image courante en une localisation prédéterminée ;
- mise à jour (E4) d'un deuxième conteneur, dit conteneur de métadonnées, par insertion de ladite au moins une information de structure de codage et d'une information représentative de la localisation des données codées dans le conteneur de transport; et
- transmission à l'équipement client du deuxième conteneur ;
- sur réception d'une requête de l'équipement client, dont la génération est décidée en fonction des informations de métadonnées du deuxième conteneur, comprenant au moins une information représentative de la localisation des données, transmission des données codées du conteneur de transport correspondant à ladite localisation.

2. Procédé de traitement de données codées représentatives d'une séquence d'images numériques, selon la revendication **1**, **caractérisé en ce qu'**il comprend une étape préalable de création du premier conteneur, comprenant une réservation d'un espace d'enregistrement des données codées et **en ce que** les données codées de l'image courante sont enregistrées dans l'emplacement qui lui est réservé à la suite des données codées précédemment traitées.

3. Procédé de traitement de données codées représentatives d'une séquence d'images numériques, selon la revendication **1**, **caractérisé en ce qu'**il comprend une étape préalable de création du premier conteneur, comprenant une réservation d'un espace global de stockage pour le groupe d'images et **en ce que** les données codées de l'image courante sont insérées avant les données codées des images précédemment traitées.

4. Procédé de traitement de données codées selon l'une des revendications précédentes, **caractérisé en ce que** les données codées représentatives de l'image courante sont obtenues pour au moins deux niveaux de représentation, **en ce que** ladite au moins une information de structure de codage comprend une information relative auxdits niveaux de représentation, **en ce que** les données codées représentatives de l'image courante sont insérées dans un sous conteneur du premier conteneur en fonction du niveau de représentation et **en ce que**, la requête reçue de l'équipement client comprenant en outre une information de structure de codage relative au niveau de représentation choisi par l'équipement client, l'étape de transmission des données codées comprend la transmission des données codées du sous-conteneur correspondant audit niveau de représentation.

5. Procédé de traitement de données codées selon l'une des revendications précédentes, **caractérisé en ce qu'**il comprend en outre une étape de segmentation des données codées obtenues en fonction d'une appartenance de l'image courante à un segment de la séquence d'images, un segment comprenant une pluralité d'images consécutives et **en ce que** les données codées sont insérées dans un sous-conteneur du premier conteneur associé audit segment.

6. Dispositif (100) de traitement de données codées représentatives d'une séquence d'images numériques, en vue de leur transmission à un équipement client par l'intermédiaire d'un réseau de communication dans un premier conteneur, dit conteneur de transport, destiné à stocker au moins les données codées des images de la séquence, **caractérisé en ce qu'**il comprend les unités suivantes, aptes à être mises en œuvre suite à l'encodage d'une image de ladite séquence, dite image courante :
- obtention (GET) des données codées représentatives de l'image courante
- extraction (EXTR) d'au moins une information représentative d'une structure de codage de l'image courante ;
- mise à jour (UP C1) du premier conteneur par insertion des données codées représentatives de l'image courante en une localisation prédéterminée ;
- mise à jour (UP C2) d'un deuxième conteneur, dit conteneur de métadonnées, par insertion de ladite au moins une information de structure de codage et d'une information représentative de la localisation des données codées dans le conteneur de transport; et
- transmission du deuxième conteneur à l'équipement client ;
- sur réception d'une requête de l'équipement client, dont la génération est décidée en fonction des informations de métadonnées du deuxième conteneur, comprenant au moins une information représentative de la localisation des données, transmission des données codées du conteneur de transport correspondant à ladite localisation.

7. Procédé de réception de données codées représentatives d'une séquence d'images numériques par l'intermédiaire d'un réseau de communication, **caractérisé en ce qu'**il comprend les étapes suivantes, mises en œuvre pour au moins une image de la séquence, dite image courante :
- obtention (C1) d'un deuxième conteneur, dit conteneur de métadonnées, comprenant au moins une information d'une structure de codage de l'image courante et une information représentative de la localisation des données codées représentatives de l'image courante dans un premier conteneur de transport ;
- Extraction (C2) de ladite au moins une information d'une structure de codage de l'image courante et de l'information représentative de la localisation des données codées représentatives de l'image courante dans le premier conteneur de transport ;
- Décision (C3) de requérir la transmission des données codées représentatives de l'image courante enregistrées dans le premier conteneur en fonction des informations obtenues;
- En cas de décision positive, émission (C4) d'un message de requête de transmission des données codées représentatives de ladite au moins une image, comprenant ladite information de localisation desdites données codées dans le premier conteneur.

8. Procédé de réception de données codées représentatives d'une séquence d'images numériques selon la revendication **7**, **caractérisé en ce que** ladite au moins une information d'une structure de codage de l'image courante comprenant une information relative à un niveau de représentation de l'image codée parmi au moins deux niveaux distincts, le procédé comprend une phase d'initialisation au cours de laquelle il requiert les données codées représentatives de l'image courante au niveau de représentation le plus bas et il estime des paramètres représentatifs de conditions de transmission du réseau de communication et **en ce que**, pour une image suivante, il décide de requérir les données codées à un niveau de représentation choisi en fonction des paramètres estimés, la requête comprenant en outre une information relative au niveau de représentation choisi.

9. Dispositif (200) de réception de données codées représentatives d'une séquence d'images numériques par l'intermédiaire d'un réseau de communication, **caractérisé en ce qu'**il comprend les unités suivantes, aptes à être mises en œuvre pour au moins une image de la séquence, dite image courante :
- Obtention (GET) d'un deuxième conteneur, dit conteneur de métadonnées, comprenant au moins une information d'une structure de codage de l'image courante et une information représentative de la localisation des données codées représentatives de l'image courante dans un premier conteneur de transport ;
- Extraction (EXTR) de ladite au moins une information d'une structure de codage de l'image courante et de l'information représentative de la localisation des données codées représentatives de l'image courante dans le premier conteneur de transport ;
- Décision (DEC) de requérir la transmission des données codées représentatives de l'image courante enregistrées dans le premier conteneur en fonction des informations obtenues;
- En cas de décision positive, émission (REQ) d'un message de requête de transmission des données codées représentatives de ladite au moins une image, comprenant ladite information de localisation desdites données codées dans le premier conteneur.

10. Equipement serveur apte à communiquer avec un équipement client par l'intermédiaire d'un réseau de communication, **caractérisé en ce qu'**il comprend un dispositif de traitement de données codées selon la revendication 6.

11. Equipement client apte à communiquer avec un équipement serveur par l'intermédiaire d'un réseau de communication, **caractérisé en ce qu'**il comprend un dispositif de réception de données codées selon la revendication 9.

12. Programme d'ordinateur comprenant des instructions pour la mise en œuvre du procédé de traitement de données codées selon l'une des revendications 1 à 5.

13. Programme d'ordinateur comprenant des instructions pour la mise en œuvre du procédé de réception de données codées selon l'une des revendications 7 à 8.

## Patentansprüche

1. Verfahren zur Verarbeitung von codierten Daten, die für eine Sequenz digitaler Bilder repräsentativ sind, zwecks ihrer Weiterleitung an eine Client-Ausrüstung über ein Kommunikationsnetz in einem ersten Container, bezeichnet als Transportcontainer, der zum Speichern mindestens der codierten Daten der Bilder der Sequenz bestimmt ist, **dadurch gekennzeichnet, dass** es die folgenden Schritte umfasst, die infolge der Codierung eines Bildes der Sequenz, bezeichnet als laufendes Bild, umgesetzt werden:
- Erhalten (E1) der codierten Daten, die für das laufende Bild repräsentativ sind;
- Extrahieren (E2) mindestens einer Information, die für eine Codierungsstruktur des laufenden Bildes repräsentativ ist;
- Aktualisieren (E3) des ersten Containers durch Einfügen der codierten Daten, die für das laufende Bild repräsentativ sind, an einer vorher festgelegten Lokalisierung;
- Aktualisieren (E4) eines zweiten Containers, bezeichnet als Metadatencontainer, durch Einfügen der mindestens einen Codierungsstrukturinformation und einer Information, die für die Lokalisierung der codierten Daten im Transportcontainer repräsentativ ist; und
- Übertragen, an die Client-Ausrüstung, des zweiten Containers;
- bei Empfang einer Anforderung von der Client-Ausrüstung, deren Generierung in Abhängigkeit von den Metadateninformationen des zweiten Containers entschieden wird, umfassend mindestens eine Information, die für die Lokalisierung der Daten repräsentativ ist, Übertragen der codierten Daten des entsprechenden Transportcontainers an die Lokalisierung.

2. Verfahren zur Verarbeitung von codierten Daten, die für eine Sequenz digitaler Bilder repräsentativ sind, nach Anspruch 1, **dadurch gekennzeichnet, dass** es einen vorherigen Einrichtungsschritt des ersten Containers umfasst, umfassend eine Reservierung eines Speicherplatzes der codierten Daten und dass die codierten Daten des laufenden Bildes an der Stelle gespeichert werden, die infolge der zuvor verarbeiteten codierten Daten für es reserviert sind.

3. Verfahren zur Verarbeitung von codierten Daten, die für eine Sequenz digitaler Bilder repräsentativ sind, nach Anspruch 1, **dadurch gekennzeichnet, dass** es einen vorherigen Einrichtungsschritt des ersten Containers umfasst, umfassend eine Reservierung eines globalen Speicherplatzes für die Gruppe von Bildern und dass die codierten Daten des laufenden Bildes vor den zuvor verarbeiteten codierten Daten der Bilder eingefügt werden.

4. Verfahren zur Verarbeitung von codierten Daten nach einem der vorangehenden Ansprüche, **dadurch gekennzeichnet, dass** die codierten Daten, die für das laufende Bild repräsentativ sind, für mindestens zwei Repräsentationsniveaus erhalten werden, dass die mindestens eine Codierungsstrukturinformation eine Information umfasst, die sich auf die Repräsentationsniveaus bezieht, dass die codierten Daten, die für das laufende Bild repräsentativ sind, in einen Sub-Container des ersten Containers in Abhängigkeit vom Repräsentationsniveau eingefügt werden und dass, wobei die von der Client-Ausrüstung empfangene Anforderung ferner eine Codierungsstrukturinformation umfasst, die sich auf das von der Client-Ausrüstung ausgewählte Repräsentationsniveau bezieht, der Übertragungsschritt der codierten Daten die Übertragung der codierten Daten des Sub-Containers entsprechend dem Repräsentationsniveau umfasst.

5. Verfahren zur Verarbeitung von codierten Daten nach einem der vorangehenden Ansprüche, **dadurch gekennzeichnet, dass** es ferner einen Segmentierungsschritt der erhaltenen codierten Daten in Abhängigkeit von einer Zugehörigkeit des laufenden Bildes zu einem Segment der Bildsequenz umfasst, wobei ein Segment eine Vielzahl aufeinanderfolgender Bilder umfasst und dass die codierten Daten in einen Sub-Container des ersten Containers eingefügt werden, der dem Segment zugeordnet isst.

6. Vorrichtung (100) zur Verarbeitung von codierten Daten, die für eine Sequenz digitaler Bilder repräsentativ sind, zwecks ihrer Übertragung an eine Client-Ausrüstung über ein Kommunikationsnetz in einem ersten Container, bezeichnet als Transportcontainer, der zum Speichern mindestens der codierten Daten der Bilder der Sequenz bestimmt ist, **dadurch gekennzeichnet, dass** sie die folgenden Einheiten umfasst, die imstande sind, infolge der Codierung eines Bildes der Sequenz, bezeichnet als laufendes Bild, umgesetzt zu werden:
- Erhalten (GET) der codierten Daten, die für das laufende Bild repräsentativ sind;
- Extrahieren (EXTR) mindestens einer Information, die für eine Codierungsstruktur des laufenden Bildes repräsentativ ist;
- Aktualisieren (UP C1) des ersten Containers durch Einfügen der codierten Daten, die für das laufende Bild repräsentativ sind, an einer vorher festgelegten Lokalisierung;
- Aktualisieren (UP C2) eines zweiten Containers, bezeichnet als Metadatencontainer, durch Einfügen der mindestens einen Codierungsstrukturinformation und einer Information, die für die Lokalisierung der codierten Daten im Transportcontainer repräsentativ ist; und
- Übertragen des zweiten Containers an die Client-Ausrüstung;
- bei Empfang einer Anforderung von der Client-Ausrüstung, deren Generierung in Abhängigkeit von den Metadateninformationen des zweiten Containers entschieden wird, umfassend mindestens eine Information, die für die Lokalisierung der Daten repräsentativ ist, Übertragen der codierten Daten des entsprechenden Transportcontainers an die Lokalisierung.

7. Verfahren für den Empfang codierter Daten, die für eine Sequenz digitaler Bilder repräsentativ sind, über ein Kommunikationsnetz, **dadurch gekennzeichnet, dass** es die folgenden Schritte umfasst, die für mindestens ein Bild der Sequenz, bezeichnet als laufendes Bild, umgesetzt werden:
- Erhalten (C1) eines zweiten Containers, bezeichnet als Metadatencontainer, umfassend mindestens eine Information einer Codierungsstruktur des laufenden Bildes und eine Information, die für die Lokalisierung der codierten Daten, die für das laufende Bild repräsentativ sind, in einem ersten Transportcontainer repräsentativ ist;
- Extrahieren (C2) der mindestens einen Information einer Codierungsstruktur des laufenden Bildes und der Information, die für die Lokalisierung der codierten Daten, die für das laufende Bild repräsentativ sind, in dem ersten Transportcontainer repräsentativ ist;
- Entscheiden (C3), die Übertragung der für das laufende Bild repräsentativen codierten Daten, die in dem ersten Container gespeichert sind, in Abhängigkeit von den erhaltenen Informationen anzufordern;
- bei einer positiven Entscheidung, Senden (E4) einer Nachricht zwecks Anforderung der Übertragung der codierten Daten, die für das mindestens eine Bild repräsentativ sind, umfassend die Lokalisierungsinformation der codierten Daten in dem ersten Container.

8. Verfahren für den Empfang codierter Daten, die für eine Sequenz digitaler Bilder repräsentativ sind, nach Anspruch 7, **dadurch gekennzeichnet, dass** die mindestens eine Information einer Codierungsstruktur des laufenden Bildes eine Information umfasst, die sich auf ein Repräsentationsniveau des codierten Bildes von mindestens zwei unterschiedlichen Niveaus bezieht, wobei das Verfahren eine Initialisierungsphase umfasst, bei der es die codierten Daten, die für das laufende Bild repräsentativ sind, auf dem niedrigsten Repräsentationsniveau anfordert und Parameter abschätzt, die für die Übertragungsbedingungen des Kommunikationsnetzes repräsentativ sind und dass es für ein folgendes Bild entscheidet, die codierten Daten auf einem Repräsentationsniveau anzufordern, das in Abhängigkeit der abgeschätzten Parameter ausgewählt wird, wobei die Anforderung ferner eine Information umfasst, die sich auf das ausgewählte Repräsentationsniveau bezieht.

9. Vorrichtung (200) für den Empfang codierter Daten, die für eine Sequenz digitaler Bilder repräsentativ sind, über ein Kommunikationsnetz, **dadurch gekennzeichnet, dass** sie die folgenden Einheiten umfasst, die imstande sind, für mindestens ein Bild der Sequenz, bezeichnet als laufendes Bild, umgesetzt zu werden:
- Erhalten (GET) eines zweiten Containers, bezeichnet als Metadatencontainer, umfassend mindestens eine Information einer Codierungsstruktur des laufenden Bildes und eine Information, die für die Lokalisierung der codierten Daten, die für das laufende Bild repräsentativ sind, in einem ersten Transportcontainer repräsentativ ist;
- Extrahieren (EXTR) der mindestens einen Information einer Codierungsstruktur des laufenden Bildes und der Information, die für die Lokalisierung der codierten Daten, die für das laufende Bild repräsentativ sind, in dem ersten Transportcontainer repräsentativ ist;
- Entscheiden (DEC), die Übertragung der für das laufende Bild repräsentativen codierten Daten, die in dem ersten Container gespeichert sind, in Abhängigkeit von den erhaltenen Informationen anzufordern;
- bei einer positiven Entscheidung, Senden (REQ) einer Nachricht zwecks Anforderung der Übertragung der codierten Daten, die für das mindestens eine Bild repräsentativ sind, umfassend die Lokalisierungsinformation der codierten Daten in dem ersten Container.

10. Serverausrüstung, die imstande ist, mit einer Client-Ausrüstung über ein Kommunikationsnetz zu kommunizieren, **dadurch gekennzeichnet, dass** sie eine Vorrichtung zur Verarbeitung codierter Daten nach Anspruch 6 umfasst.

11. Client-Ausrüstung, die imstande ist, mit einer Server-Ausrüstung über ein Kommunikationsnetz zu kommunizieren, **dadurch gekennzeichnet, dass** sie eine Empfangsvorrichtung von codierten Daten nach Anspruch 9 umfasst.

12. Rechnerprogramm, umfassend Befehle für die Umsetzung des Verfahrens zur Verarbeitung von codierten Daten nach einem der Ansprüche 1 bis 5.

13. Rechnerprogramm, umfassend Befehle für die Umsetzung des Verfahrens für den Empfang von codierten Daten nach einem der Ansprüche 7 bis 8.

## Claims

1. A method for processing encoded data representative of a sequence of digital frames, for transmission to a client equipment via a communication network in a first container, so-called transport container, for storing at least the encoded data of the frames of the sequence, **characterised in that** it comprises the following steps, implemented following the encoding of a frame of said sequence, so-called current frame:
- obtaining (E1) encoded data representative of the current frame;
- extracting (E2) at least one information representative of an encoding structure of the current frame;
- updating (E3) the first container by inserting encoded data representative of the current frame into a predetermined location;
- updating (E4) a second container, so-called metadata container, by inserting said at least one information of encoding structure and information representative of the location of the encoded data in the transport container; and
- transmitting the second container to the client equipment;
- upon receipt of a request from the client equipment, whose generation is decided based on metadata information of the second container, comprising at least one piece of information representative of the location of the data, transmitting the encoded data of the transport container corresponding to said location.

2. The method for processing encoded data representative of a sequence of digital frames, according to claim 1, **characterised in that** it comprises a preliminary step of creating the first container, comprising a reservation of a recording space of the encoded data and **in that** the encoded data of the current frame are recorded in the location reserved for it as a result of the encoded data previously processed.

3. The method for processing encoded data representative of a sequence of digital frames, according to claim 1, **characterised in that** it comprises preliminary step of creating the first container, comprising a reservation of a global storage space for the group of frames and **in that** the encoded data of the current frame are inserted before the encoded data of previously processed frames.

4. The method for processing encoded data according to any of the previous claims, wherein the encoded data representative of the current frame are obtained for at least two levels of representation, wherein said at least one encoding structure information comprises information relating to said levels of representation, wherein the encoded data representative of the current frame are inserted in a sub-container of the first container according to the level of representation and wherein the request received from the client equipment further comprising encoding structure information relating to the level of representation chosen by the client equipment, the step of transmitting the encoded data comprises transmitting the encoded data of the corresponding sub container to said level of representation.

5. The method for processing encoded data according to any of the previous claims, **characterised in that** it further comprises a step of segmenting the encoded data obtained according to whether the current frame is part of a segment of the frame sequence, a segment comprising a plurality of consecutive frames, and **in that** the encoded data are inserted into a sub-container of the first container associated with said segment.

6. A device (100) for processing encoded data representative of a sequence of digital frames, for transmission to a client equipment via a communication network in a first container, so-called transport container, for storing at least the encoded data of the frames of the sequence, **characterised in that** it comprises the following units, implemented following the encoding of a frame of said sequence, so-called current frame:
- Obtaining (GET) encoded data representative of the current frame;
- extracting (EXTR) at least one information representative of an encoding structure of the current frame;
- updating (UP C1) the first container by inserting encoded data representative of the current frame into a predetermined location;
- updating (UP C2) a second container, so-called metadata container, by inserting said at least one information of an encoding structure and information representative of the location of the encoded data in the transport container; and
- transmitting the second container to the client equipment;
- upon receipt of a request from the client equipment, whose generation is decided based on metadata information of the second container, comprising at least one piece of information representative of the location of the data, transmitting the encoded data of the transport container corresponding to said location.

7. A method for receiving encoded data representative of a sequence of digital frames via a communication network, **characterised in that** it comprises the following steps, implemented for at least one frame of the sequence, so-called current frame:
- obtaining (C1) a second container, so-called metadata container, comprising at least one information of an encoding structure of the current frame and a piece of information representative of the location of the encoded data representative of the current frame in a first transport container;
- extracting (C2) said at least one information of an encoding structure of the current frame and a piece of information representative of the location of the encoded data representative of the current frame in a first transport container;
- deciding (C3) to request the transmission of encoded data representative of the current frame recorded in the first container according to the information obtained;
- in case of a positive decision, issuing (C4) a request message for transmitting encoded data representative of said at least one frame, comprising said location information of said encoded data in the first container.

8. The method for receiving encoded data representative of a sequence of digital frames, according to claim 7, **characterised in that** said at least one information of an encoding structure of the current frame comprising one information relating to a level of representation of the encoded frame among at least two distinct levels, the method comprises an initialization phase during which it requires the encoded data representative of the current frame at the lowest representation level and it estimates parameters representative of transmission conditions of the communication network and for a next frame, it decides to request the encoded data at a chosen representation level based on the estimated parameters, the request further comprising a piece of information relating to the level of representation selected.

9. A device (200) for receiving encoded data representative of a sequence of digital frames via a communication network, **characterised in that** it comprises the following units, implemented for at least one frame of the sequence, so-called current frame:
- obtaining (GET) a second container, so-called metadata container, comprising at least one information of an encoding structure of the current frame and a piece of information representative of the location of the encoded data representative of the current frame in a first transport container;
- extracting (EXTR) said at least one information of an encoding structure of the current frame and a piece of information representative of the location of the encoded data representative of the current frame in the first transport container,
- deciding (DEC) to request the transmission of encoded data representative of the current frame recorded in the first container according to the information obtained;
- in case of a positive decision, issuing (REQ) a request message for transmitting encoded data representative of said at least one frame, comprising said location information of said encoded data in the first container.

10. A server equipment capable of communicating with a client equipment via a communication network, **characterised in that** it comprises a device for processing encoded data according to claim 6.

11. A client equipment capable of communicating with a server equipment via a communication network, **characterised in that** it comprises a device for receiving encoded data according to claim 9.

12. A computer program comprising instructions for implementing the method for processing encoded data according to one of claims 1 to 5.

13. A computer program comprising instructions for implementing the method for receiving encoded data according to one of claims 7 or 8.
